# EUROPEAN PATENT SPECIFICATION

(11) **EP 3 686 128 B1**
(45) Date of publication and mention of the grant of the patent: **09.08.2023**
(21) Application number: 20150221.8
(22) Date of filing: 03.01.2020
(51) Int. Cl.: B65F 1/00, B65F 1/12

(54) **PORTABLE WASTE COLLECTOR, WASTE COLLECTOR STATION, WASTE DISPOSAL SYSTEM AND WASTE DISPOSAL METHOD**
TRAGBARER ABFALLSAMMLER, ABFALLSAMMELSTATION, ABFALLENTSORGUNGSSYSTEM UND ABFALLENTSORGUNGSVERFAHREN
COLLECTEUR DE DÉCHETS PORTABLE, STATION DE COLLECTE DE DÉCHETS, SYSTÈME ET PROCÉDÉ D'ÉVACUATION DES DÉCHETS

(30) Priority: 22.01.2019 EP 19153148
(43) Date of publication of application: 29.07.2020
(73) Proprietor: Sony Group Corporation, Tokyo 108-0075 (JP)
(72) Inventor: CEULEMANS, Gert, 70327 Stuttgart (DE)
(74) Representative: 2SPL Patentanwälte PartG mbB

(56) References cited:
- EP-A1- 2 808 273
- WO-A2-95/11180
- US-A1- 2014 305 851

## Description

### Field

The present disclosure generally relates to sorting and collecting waste. The invention relates to a portable waste collector, a waste collector station, a waste collection system comprising the portable waste collector and the waste collector station, and a waste collecting method.

### Background

In offices, people often only have a small waste bin next to their desk to collect all trash indiscriminately without any consideration for sorting to enable recycling. To promote recycling, trash cans next to the desks are removed in some offices, and replaced by big 'waste islands' at central locations which separately collect, e.g., plastics/metals, paper, and nonrecyclable waste, e.g. using separate openings for the different kinds of waste. This may cause some frustration, as office workers may have to go to one of the waste islands for every single piece of waste.

US patent application US 2014/0305851 A1 discloses a waste collection system to identify and classify waste materials into a plurality of pre-established categories and then to sort into and collect the waste materials by the plurality of the pre-established categories for subsequent disposal. The waste collection system is designed to deal with medical waste and uses a scanner to determine the type of waste (hazardous or non-hazardous) via a database of waste products. Only if the waste collection system fails to identify the type of waste, the user is asked to enter details on the waste, e.g. the product name, via a touchscreen. The waste is sorted into different bins, which can be taken out via a door.

EP 2 808 273 A1 discloses an underground container for the reception of waste in two different compartments, which can be emptied separately into respective tanks of a garbage vehicle. The separate compartments are emptied by their bottom by operating an actuator which is linked to a bottom trap door.

WO 95/11180 A2 discloses a garbage vehicle for the separate collection of refuse from containers comprising several compartments. The containers are designed to be emptied through their bottom. The vehicle comprises a mechanical centring system so as to align the container to be emptied with the tank of the vehicle, so that the different compartments of the containers can be emptied in different compartments of the tank.

### Summary

It is an object of the present disclosure to provide a portable waste collector, a waste collector station, a waste collection system and a waste collecting method that enable convenient waste sorting, especially for office environments.

The object of the invention is achieved by a portable waste collector in accordance with claim 1, a waste collector station in accordance with claim 13, and a waste collecting method in accordance with claim 15.

Further embodiments of the present disclosure provide a waste collection system comprising the portable waste collector and the waste collector station.

### Brief description of the Figures

Some examples of apparatuses and/or methods will be described in the following by way of example only, and with reference to the accompanying figures, in which
- Figs. 1a and 1b: show block diagrams of embodiments of a portable waste collector;
- Fig. 2: shows a block diagram of an embodiment of a waste collector station and of a system comprising a waste collector station and portable waste collector;
- Fig. 3: shows a flow chart of a waste disposal method; and
- Fig. 4: shows a drawing of an embodiment of a portable waste collector.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Same or like numbers refer to like or similar elements throughout the description of the figures.

Unless otherwise defined, all terms (including technical and scientific terms) are used herein in their ordinary meaning of the art to which the examples belong.

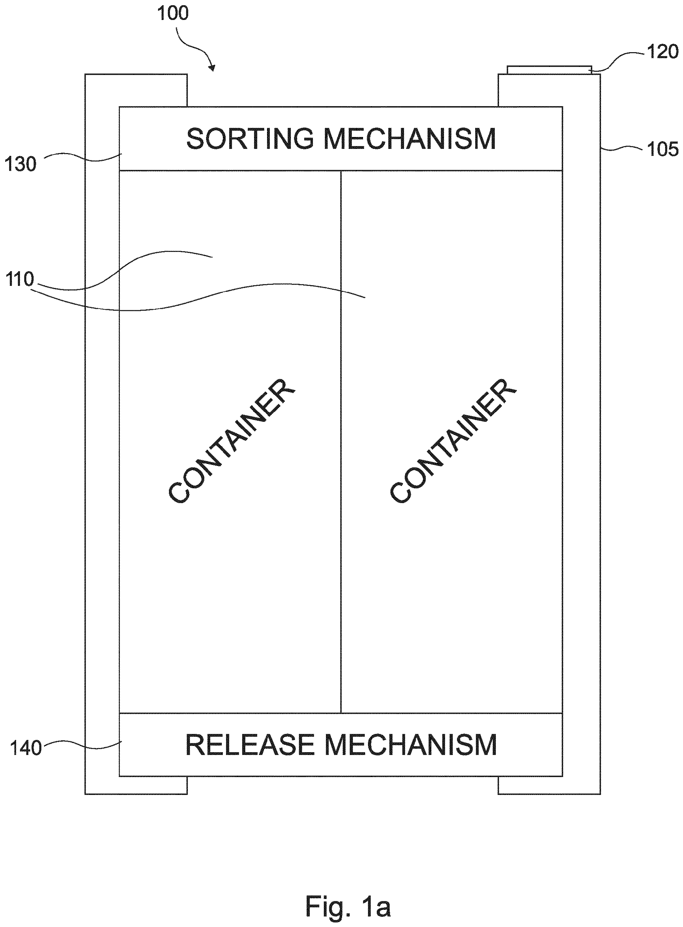

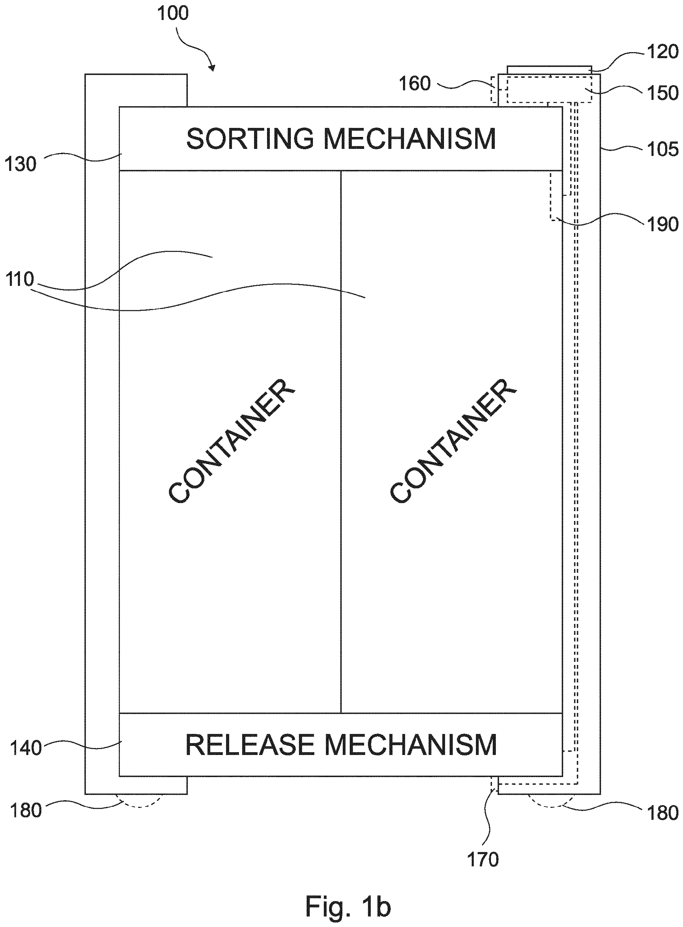

Figs. 1a and 1b show block diagrams of embodiments of a portable waste collector 100. The portable waste collector comprises two or more containers 110 for storing two or more different types of waste. The portable waste collector comprises a user interface 120 configured to receive a user input. The portable waste collector comprises a sorting mechanism 130 configured to sort a received piece of waste into one of the two or more containers according to its type. The sorting is based on a waste sorting control signal obtained based on the user input received via the user interface 120. The portable waste collector comprises a waste release mechanism 140 configured to separately release the waste stored in the two or more containers.

A portable waste collector may constitute a personal waste bin with a small footprint and the ability to separately store different types of waste, which may e. g. be kept on or under a desk in an office environment. Once in a while, e. g., once the portable waste collector is full, it may be taken to a waste collector station, where the different types of waste may be released into two or more corresponding containers of the waste collector station. Using the portable waste collector, the waste is already sorted when it is taken to the waste collector station. The waste release mechanism 140 allows for an easy transfer of the sorted waste into the waste collector station. That is, the portable waste collector of the present disclosure enables convenient sorting of at least parts of the received waste, particularly in an office environment.

Contrary to a large, stationary waste island for sorting different types of waste, the portable waste collector of some embodiments may be placed near individual users, e.g. below or on desks of office users. The portable waste collector may be a personal waste bin, i.e. used by a single person. This may provide a convenient waste disposal solution for said users while enabling sorting of the waste. To be portable, the portable waste collector may be smaller than a stationary waste island. For example, a height of the portable waste collector may be at most 70 cm (or at most 60 cm, at most 50 cm, at most 40 cm). A diameter of the portable waste collector may be at most 50 cm (or at most 40 cm, at most 30 cm). To make it portable, the portable waste collector might also be light enough to carry. For example, a weight of the portable waste collector (without waste) may be less than 3 kg (or less than 2.5 kg, less than 2 kg). In at least some embodiments, the portable waste collector may further comprise a handle for carrying the portable waste collector (not shown).

The portable waste collector comprises the two or more containers 110. The two or more containers are used to store the two or more different types of waste. In general, there may be a one-to-one relationship between the two or more different types of waste and the two or more containers. For example, each container of the two or more containers may be provided for a single type of waste of the two or more different types of waste. Each of the two or more different types of waste may be designated to be stored within exactly one of the two or more containers. Furthermore, the two or more containers may be inside of the portable waste collector, e.g. in contrast to them being attached to the portable waste collector. The two or more containers may be (entirely) comprised within a housing 105 of the portable waste collector.

The two or more containers are suitable and/or designated for storing the two or more different types of waste. For example, the two or more types of waste may comprise at least two elements of the group of paper waste, plastic waste, aluminum waste, organic waste and residual waste. The different types of waste may be stored separately so they can later be separately released into a waste collector station, which may also separately store the different types of waste, and from which the waste may ultimately be separately transferred to a recycling facility. To accommodate the different types of waste, the two or more containers may be adapted to the two or more different types of waste. A size, a coating, a diameter and/or an arrangement of the two or more containers may be adapted to the two or more different types of waste. Thus, the two more containers may have different sizes, different coatings and/or different diameters. In other words, a container that is designated for a type of waste that is likely to make up the majority of the received waste, e.g. paper, may be larger than other containers of the two or more containers. A container designated for organic or residual waste may comprise a special coating that may prevent mold, undesirable smells, or a clinging of sticky items to the walls of the container.

Embodiments are based on sorting a received piece of waste based on a user input received via the user interface. In general, there are (at least) two alternatives:
a) Letting users specify the type of the received piece of waste via the user interface; and
b) Determining the type of the received piece of waste using one or more sensors, and letting the user confirm the determined type of the received piece of waste.

In both alternatives, the user input may be received based on a touch of the user. For example, the user interface may comprise one or more separate selection elements, e.g. one or more push buttons, one or more capacitive buttons, or one or more user interface elements on a touchscreen. For example, in case a), the user interface may comprise two or more separate selection elements representing the two or more different types of waste. In case b), the user interface may comprise a selection element for confirming the determined type of waste. Additionally, the user interface may comprise two or more separate selection elements representing the two or more different types of waste if the determination of the type of waste is incorrect. For example, the selection element for confirming the determined type of waste may be shown on a touchscreen in a first time interval. If the determined type of waste is incorrect, then the two or more separate selection elements representing the two or more different types of waste may be shown on the touch screen in a second time interval if the confirmation selection element has not been pressed within the first time interval. Alternatively, other user interfaces may be used, e.g. a voice interface or a gesture interface may be used for confirming the determination of the type of waste. The user interface may comprise or correspond to a voice interface or a gesture-based interface. For example, the gesture-based interface may be based on Time of Flight technology or based on a capacitive sensor.

The portable waste collector comprises the sorting mechanism 130 that is configured to sort a received piece of waste into one of the two or more containers according to its type. For example, the portable waste collector may comprise an opening (e.g. a single opening) for receiving the waste from a user. This may contribute to making the portable waste collector small in size. A sorting mechanism with only a single opening may require less space than separate openings for the two or more types of waste, especially if the waste is compacted (i.e. compressed) within the sorting mechanism, making it fit through smaller openings to the two or more containers, but also if the waste remains uncompressed, as the use of the sorting mechanism is convenient (i.e. potentially less sullying to the user's hands) and easy to use for the user. For example, the opening may be arranged at the top of the portable waste collector. The sorting mechanism may be arranged aligned with, or (directly) behind or under, the opening for receiving the waste, so that a piece of waste received in the opening is also received by the sorting mechanism. The sorting mechanism is configured to sort the waste into the two or more containers within the portable waste collector. For example, in an exemplary implementation, the sorting mechanism may be arranged at the top of the portable waste collector, above the two or more containers, and the waste release mechanism may be arranged below the two or more containers, using gravity to assist moving the waste from the sorting mechanism to the two or more containers, and from the two or more containers to two or more corresponding containers of a waste collector station. In at least some embodiments, the sorting mechanism may be a mechanical sorting mechanism. For example, the sorting mechanism may comprise a plate or surface for receiving the waste, and a mechanical component (e.g. a mechanical arm), configured to push the received piece of waste into one of the two or more containers. Consequently, above the plate or surface, the sorting mechanism may comprise two or more inlets for the two or more containers, and the mechanical component may be configured to push the received piece of waste through the corresponding inlet into one of the two or more containers. In some embodiments, the mechanical component may further be configured to compress the received piece of waste, e.g. before pushing the piece of waste into one of the two or more containers. For example, the two or more containers may be separated from the sorting mechanism by two or more tiltable covers, and the sorting mechanism may be configured to use the mechanical component to push the received waste against the tiltable cover of a container until the cover is tilted by the force of the mechanical component. The tiltable cover may be configured to admit the piece of waste to the container if the force exceeds a threshold. In the process, the piece of waste may be compacted. The mechanical component may be configured to operate based on the waste sorting control signal. Alternatively, the plate or surface may be the mechanical component. The sorting mechanism may be configured to tilt the plate or surface so that the received piece of waste slides into one of the two or more containers. For example, if there are two containers, the plate may be rectilinear, and may be configured to tilt towards one of the two containers based on the waste sorting control signal. With three containers, the plate might be triangular, with four containers, the plate might be square.

In order to sort a received piece of waste into the two or more containers, the sorting mechanism may be controlled by a control signal. In at least some embodiments, as further shown in Fig. 1b, the control signal originates from a control circuitry 150. The control circuitry may be configured to control the user interface and/or the sorting mechanism, and is configured to control the waste release mechanism. In embodiments the control circuitry 150 may be implemented using one or more processing units or any means for processing, such as a processor, a computer or a programmable hardware component being operable with accordingly adapted software. In other words, the described function of the control circuitry 150 may as well be implemented in software, which is then executed on one or more programmable hardware components. Such hardware components may comprise a general purpose processor, a Digital Signal Processor (DSP), a micro-controller, etc. The control circuitry may be configured to generate the waste storing control signal, e.g. based on the user input received via the user interface 120. The control circuitry is coupled to the waste release mechanism 140 and to a presence sensor 170 Additionally, as shown in Fig. 1b, the control circuitry may be coupled to one or more elements of the group of the user interface 120, the sorting mechanism 130, one or more sensors 160, a propulsion system 180 and/or a fill level sensor 190.

In general, to appropriately sort the received waste into the two or more containers, the type of the waste may be determined, e.g. by the control circuitry. In other words, the control circuitry may be configured to determine the type of the received waste based on the user input received via the user interface. For example, the received piece of waste may be a sheet of paper, and after placing the paper in the opening of the portable waste collector, the user may select a corresponding selection element of the user interface, e. g., press a "paper" button. Then, the control circuitry may determine that the type of waste is paper. The control circuitry may be configured to generate the waste sorting control signal based on the determined type of the received waste. For example, the waste sorting control signal may be operable to instruct the sorting mechanism as to which of the two or more containers the received waste is to be sorted into (according to its type); so for the above example, the piece of waste (the sheet of paper), the instruction would be to sort it into a paper container. The determination of the type of the received waste based on the user input may enable a correct sorting of the waste, either by user confirmation of the type of waste as sensed by a sensor, or by user selection of the type of waste.

In at least some embodiments, the type of the received waste is determined using a sensor and based on the user input. For example, the type of the received waste may be determined using a sensor and confirmed based on the user input. Alternatively, the type of the received waste may be determined using the user input and confirmed based on a sensor signal of the sensor. As at least some embodiments of the portable waste collector may have a compact size, space may be limited for the inclusion of sensors. A combination of user input and sensor measurements may enable the use of fewer sensors, as waste types that cannot be determined based on the sensors alone may be determined using the user input instead. Consequently, the portable waste collector may, as further shown in Fig. 1b, comprise one or more sensors 160 configured to provide a sensor signal to the control circuitry when a piece of waste is received by the sorting mechanism. For example, the one or more sensors may comprise at least one of a visual sensor (e.g. a camera), an olfactory sensor, and a sensor for determining a composition of the received waste (e.g. based on a water content of the received waste). For example, the sensor signal may indicate a composition of the received waste. The sensor signal may enable the control circuitry to determine the type of the received piece of waste. The sensors may enable a convenient determination of the type of the received waste.

In at least some embodiments, the one or more sensors may comprise or correspond to a camera. The camera may be configured to provide an image signal (i.e. the sensor signal) to the control circuitry. The image signal may comprise a visual image of the received waste. The control circuitry may be configured to determine the type of the received waste based on the visual image of the received waste, e.g. using object recognition. In at least some examples, the object recognition may be based on a pre-trained or trainable neural network. Alternatively, the object recognition may be based on a plurality of visual representations of waste stored within the control circuitry, wherein each visual representation is assigned a type of the waste represented by the visual representation.

To make sure the determined type of the waste is correct, the determined type of waste may be confirmed by a user of the portable waste collector using the user interface. The control circuitry may be configured to control the user interface to display the determined type of the waste and the user interface may be configured to obtain the user input in reaction to the displayed determined type of the waste. In other words, the user interface may be configured to provide an indication of the determined type of the piece of waste to a user of the portable waste collector based on a corresponding signal from the control circuitry. The user interface may be configured to prompt the user for an input indicating whether the determined type of the piece of waste is correct or not. In this case, the user input may indicate whether the determined type of the piece of waste is correct or not. This may provide a safe-guard against incorrect determinations of the type of the received waste. For example, the control circuitry may be configured to confirm or invalidate the determined type of waste based on the user input. The user may further provide the correct type of the waste using the user interface (e.g. the user input may comprise the user-provided type of the waste). The control circuitry may be further configured to correct the determined type of the received waste if the determined type of the received waste is deemed incorrect by the user. In at least some embodiments, the control circuitry may provide the waste sorting control signal to the sorting mechanism after confirmation of the determined type of waste, or after a correction of the determined type of waste by the user.

As a waste bin is usually used many times a day, the user interface may require careful attention in its functional design. To provide a clear indication to the user, even from the corner of the user's eye, a multi-colored light may be used to indicate the determined or selected type of the received waste to the user. In other words, the user interface may comprise an indicator light. The indicator light may be ring-shaped. In at least some embodiments, the indicator light may surround the opening for receiving the waste. The determined type of the received waste may be indicated by a corresponding light color of the indicator light. For example, the indicator light may be configured to light up in two or more different light colors to indicate the two or more types of waste. This may enable a clear indication of the determined type of the received waste, even in situations in which only limited attention is given to the portable waste collector.

In at least some embodiments, e.g. in embodiments without a sensor for determining the type of the received waste, or in cases in which the determination of the type of the waste based on the sensor signal is unsuccessful, the user may input the type of the waste using the user interface, e.g. using selection elements (i.e. push buttons, capacitive selection elements or touch screen elements). For example, the user interface comprises two or more separate selection elements to indicate two or more different types of waste. The two or more separate selection elements may have two or more different colors, which may correspond to two or more colors of an indicator light as introduced in the following. For example, each of the two or more separate selection elements may be associated with a type of waste of the two or more different types of waste. The user input may comprise the user selection of one of the two or more separate selection elements. The waste sorting control signal may be generated based on a user selection of one of the two or more separate selection elements. In other words, the control circuitry may be configured to generate the waste sorting control signal based on the user selection of one of the two or more separate selection elements. The control circuitry may be configured determine the type of the received waste based on the user selection of one of the two or more separate selection elements, e.g. based on a type of waste associated with the one of the two or more separate selection elements selected by the user. The control circuitry may further be configured to use the indicator light to display a light that corresponds to the selected type of the waste. The control circuitry may subsequently generate the waste sorting control signal based on the determined type of waste. This may enable a sorting of the waste without a sensor being required for analyzing the type of the waste.

The waste release mechanism 140 of the portable waste collector is configured to separately release the waste stored in the two or more containers. This may avoid having to sort the waste when it is emptied e.g. into the waste collector station. For example, the control circuitry may be configured to control the waste release mechanism such that it releases the waste stored within the two or more containers separately into two or more corresponding containers of a waste collector station 200. In other words, just like the portable waste collector, the waste collector station may comprise two or more containers that are to be used for storing the two or more different types of waste. The waste release mechanism may be configured to empty each container of the two or more containers in a corresponding container of the waste collector station, e.g. without mixing the waste content of the two or more containers. This may enable a transfer of the waste into the waste collector station without the need for a sorting of the waste at the waste collector station. In at least some embodiments, the portable waste collector comprises a single release opening. For example, the waste release mechanism may comprise two or more hatches that separate the two or more containers from the release opening. The waste release mechanism may be configured to open a hatch of the two or more hatches to release the waste that is stored within a container that is separated from the release opening by the hatch. Additionally, the waste release mechanism may comprise a further hatch for closing the release opening.

In order to release the waste, the waste release mechanism is controlled by the control circuitry 150. For example, the waste release mechanism may be trigged by a user via the user interface, e.g. by pushing a selection element. Alternatively or additionally, the waste release mechanism may be triggered if an alignment between the release opening and an interface (e.g. an inlet) of the waste collector station is reached. For example, the control circuitry may be configured to determine an alignment between the release opening and an inlet of the waste collector station, and to trigger the waste release mechanism to release the waste from the corresponding container. Alternatively or additionally, the waste release mechanism may be triggered by a mechanical trigger of the waste collector station. The waste collector station may comprise a mechanical trigger. For example, the waste collector station may have one or more pins or other trigger elements, and the release mechanism may be configured so that, if the portable waste collector is, by the user, set onto or connected with the trigger element, the release mechanism releases at least one of the containers of the portable waste collector into a suitable container of the waste collector station. Preferably, connecting the portable waste collector with a trigger element also brings the portable waste collector in a position where an opening of the waste release mechanism is aligned with an opening of the waste collector station, so that connecting the portable waste collector with the trigger element of the waste collector station causes an opening of the waste release mechanism to be aligned with an opening of the waste collector station. For example, the mechanical trigger may be implemented by a mechanical alignment component of the waste collector station (as described below). For example, the waste collector station may have trigger elements that are differently formed or located at different positions relative to the portable waste collector, and each differently formed or differently positioned element may cause the release of waste from a different container of the portable waste collector.

In order to make emptying the portable waste collector more convenient, the portable waste collector may comprise features that facilitate a release of the stored waste, e.g. into the two or more corresponding containers of the waste collector station. The portable waste collector comprises a presence detector 170 for detecting a presence of the waste collector station at a suitable position relative to the portable waste collector. The control circuitry is configured to detect the presence of the waste collector station at a suitable position relative to the portable waste collector using the presence detector. For example, the control circuitry may be configured to detect, using the presence detector, that a) a waste inlet (i.e. an opening for receiving waste) of the waste collector station is aligned with a waste outlet (i.e. an opening for releasing waste, or release opening) of the portable waste collector and/or b) which waste inlet of the waste collector station is aligned with the release opening of the portable waste collector. In at least some embodiments, the portable waste collector may comprise a (single) release opening for releasing the waste stored within (all of) the two or more containers, and the waste collector station may comprise two or more inlets, which may each be designated to receive a single type of waste of the two or more types of waste. Depending on which inlet of the waste collector station is aligned with the release opening of the portable waste collector, the waste release mechanism may be configured to release a corresponding type of waste from the two or more containers. The control circuity 150 may be configured to control the waste release mechanism to release the waste when a presence of the waste collector station at a suitable position relative to the portable waste collector is detected. For example, the control circuitry may be configured to control the waste release mechanism to release the waste corresponding to the inlet of the waste collector station that is aligned with the release opening of the portable waste collector. This may enable an automatic release of the waste when the portable waste collector is taken to the waste collector station after the portable waste collector has been brought in a suitable position in relation to the waste collector station.

One option of detecting the presence of the waste collector station at a suitable position relative to the portable waste collector is the use of visual identifiers. In some embodiments, the presence detector is a camera configured to capture a visual identifier of the waste collector station. The control circuitry may be configured to detect the presence of the waste collector station at a suitable position relative to the portable waste collector based on the captured visual identifier. Visual identifiers may be used to provide guidance to the portable waste collector as to whether a release opening of the portable waste collector and an inlet of the waste collector station are aligned, and an indication of the different inlets of the waste collector station. For example, the control circuitry may be configured to determine an alignment between the release opening of the portable waste collector and an inlet of the waste collector station based on the captured visual identifier. Furthermore, the control circuitry may be configured to determine a type of waste associated with the inlet that is aligned with the release opening of the portable waste collector based on the captured visual identifier. For example, the visual identifier may comprise a one-dimensional or two-dimensional visual information carrier, e.g. a barcode or a QR (Quick Response) code. In at least some embodiments, the visual identifier may further comprise lines for aiding an alignment between the portable waste collector and the waste collector station.

Alternatively, the presence detector may be configured to receive a radio frequency signal (i.e. a wireless data communication) from the waste collector station. For example, the presence detector may be a radio-frequency receiver configured to receive a radio frequency signal of the waste collector station. The control circuitry may be configured to detect the presence of the waste collector station at a suitable position relative to the portable waste collector based on the received radio frequency signal. This may enable the waste collector station to communicate to the portable waste collector whether an alignment between an inlet of the waste collector station and a release opening of the portable waste collector is reached, and to communicate the type of waste of an inlet that is currently aligned with a release opening of the portable waste collector. The control circuitry may thus be configured to determine an alignment between an inlet of the waste collector station and the release opening of the portable waste collector based on the received radio frequency signal. The control circuitry may be configured to determine a type of waste associated with an inlet of the waste collector station that is aligned with the release opening of the portable waste collector. In some cases, the radio-frequency signal may originate from a so-called radio-frequency identification tag (RFID-tag). In this case, the alignment may be determined based on a signal strength of the received radio-frequency signal. To trigger the transmission of the radio-frequency signal by the RFID-tag, the control circuitry may be configured to provide a stimulation signal to the RFID-tag, e.g. using a radio-frequency transmitter. Alternatively, a Near Field Communication (NFC)-tag may be used.

In at least some embodiments, the control circuitry may be configured to provide information on the alignment to a user of the portable waste collector via the user interface. For example, the control circuitry may be configured to provide a (visual or auditory) alignment guide to the user via the user interface, e.g. to guide the user about positioning the collector. Alternatively or additionally, the information on the alignment may be used for controlling a propulsion system as described in the following.

To make the emptying of the portable waste collector more comfortable, the portable waste collector may further be able to move itself between inlets of the waste collector station, e.g. to sequentially release the waste stored within the two or more containers of the portable waste collector into the two or more corresponding containers of the waste collector station. In other words, the portable waste collector may, as further shown in Fig. 1b, comprise a propulsion system 180. For example, the propulsion system may be activated by a user, e.g. using the user interface and the control circuitry, e.g. to prevent the portable waste collector from moving around on or below the desk. Alternatively, the control circuitry may be configured to activate the propulsion system based on the presence sensor, e.g. after detecting the visual identifier or the radio-frequency signal. For example, the propulsion system may comprise a motor and one or more wheels or gearwheels, to move the portable waste collector relative to the waste collector station. For example, the waste collector station may comprise rails to guide the portable waste collector on the waste collector station. Alternatively or additionally, the propulsion system may comprise an electromagnet, and the propulsion system may be configured to move the portable waste collector relative to the waste collector station using magnetic attraction.

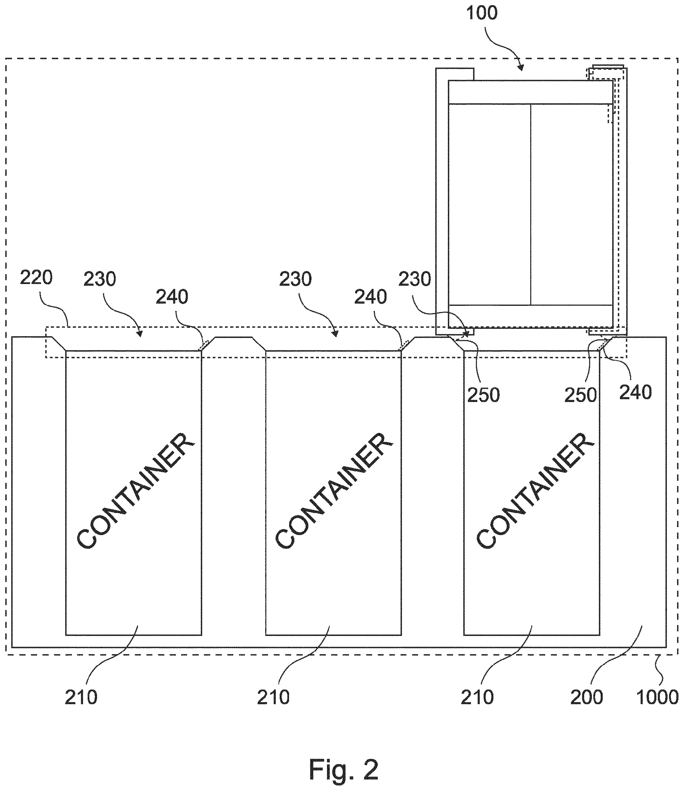

The control circuitry may be configured to control the propulsion system such that the portable waste collector is moved to a position that is aligned with an inlet of one of two or more corresponding containers of a waste collector station, enabling the waste release mechanism to release the waste stored within the two or more containers separately into the two or more corresponding containers of the waste collector station. For example, the waste collector station may comprise a mechanical or electronic alignment component for aligning the release opening of the portable waste collector with an interface for receiving waste of the waste collector station. If the waste collector station comprises a mechanical alignment component, the portable waste collector may comprise a corresponding mechanical alignment component that is form-fitted to the mechanical alignment component of the waste collector station. For example, as shown in Fig. 2, the inlets of the waste collector station may form a funnel, and the wheels of the portable waste collector 100 may be arranged at the portable waste collector such, that the release opening is aligned with the respective inlets. Alternatively, the portable waste collector may comprise a receiver structure, e.g. a receptacle for a pin, which is form-fitted to a mechanical alignment component of the waste collector station. In at least some embodiments, the mechanical alignment component may extend from the portable waste collector. Alternatively, the mechanical alignment component may provide an ingress into a surface of the waste collector station.

The control circuitry may be configured to determine the alignment based on the force required to move the portable waste collector using the propulsion system. In the example of Fig. 2, if the release opening of the portable waste collector is aligned with the inlet of the waste collector station, a force required to move the portable waste collector may increase, as the portable waste collector is located within the funnel.

After the release of a type of waste, the control circuitry may be configured to control the propulsion system to leave the aligned position, and to align the portable waste collector with the next inlet of the waste collector station. For example, the control circuitry may be configured to control the propulsion system to leave the aligned position by moving the portable waste collector from the alignment position by exceeding the force required to move the portable waste collector, and to align the portable waste collector with the next inlet of the waste collector station by moving the portable waste collector into the funnel of the next inlet of the waste collector station. Alternatively, the control circuitry may be configured to reach an alignment between the release opening and the (next) inlet of the waste collector station using the presence sensor (as described above).

For example, the control circuitry may be configured to determine an alignment between the release opening and the inlet of the waste collector station based on the visual identifier, e.g. by controlling the propulsion system to move the portable waste collector until the presence sensor is in a pre-defined position relative to the visual identifier. Alternatively, the control circuitry may be configured to determine an alignment between the release opening and the inlet of the waste collector station based on the received radio-frequency signal, e.g. by controlling the propulsion system to move the portable waste collector until the signal strength of the received radio-frequency signal is above a threshold or until the signal strength of the received radio-frequency starts to decrease instead of increasing. The propulsion system may be used to sequentially align the release opening of the portable waste collector with the inlets of the waste collector station, to separately release the waste stored within the two or more containers. In other words, the control circuitry may be configured to control the propulsion system to sequentially align the release opening of the portable waste collector with the inlets of the waste collector station.

In order to make sure that the waste is released in a hassle-free fashion, the release opening of the portable waste collector might be required to be (exactly) aligned with an inlet of the waste collector station. As an additional safeguard, the alignment between release opening and inlet may be checked, e.g. based on a sensor signal or based on a user input acknowledging the alignment. The waste release mechanism may be configured to release the waste in a corresponding container of the waste collector station once an alignment of a release opening and an inlet of the corresponding container is confirmed based on a user input or based on a sensor signal. This may enable a convenient release of the stored waste. For example, the sensor signal may be a sensor signal of the presence sensor. For example, the control circuitry may be configured to determine the alignment between the release opening of the portable waste collector and the inlet of the waste collector station using the presence sensor, e.g. based on lines for aiding the alignment of the visual identifier. Alternatively, the waste collector station may be configured to communicate to the portable waste collector if the release opening and the inlet are aligned.

In some embodiments, the confirmation is based on the user input. The control circuitry may be configured to prompt the user of the portable waste collector via the user interface to confirm, that the release opening of the portable waste collector and the inlet of the waste collector station are aligned. Additionally, the control circuitry may be configured to prompt the user via the user interface to specify the type of waste of the inlet that is aligned with the release opening, e.g. using the two or more selection elements.

As an additional feature, the portable waste collector may in one embodiment signal to its user if it is full and needs to be emptied. Consequently, the portable waste collector may comprise at least one fill level sensor 190 for determining a fill level of at least one of the two or more containers. The fill level sensor may be used to indicate to a user of the portable waste collector that the portable waste collector is (nearly) full. In at least some examples, the at least one fill level sensor may be an optical fill level sensor, e.g. to determine whether the waste within one of the two or more containers has piled up to a position of the optical fill level sensor. Alternatively, the fill level sensor may be a weighting-based fill level sensor. In some embodiments, the control circuitry may be configured to determine the fill level of at least one of the two or more container using the fill level sensor, and to display a warning regarding the fill level using the indicator light (e.g. by blinking or with a color that is not associated with a type of waste), e.g. if the fill level is above a threshold.

More details and aspects of the portable waste collector and/or of the waste collector station are mentioned in connection with the proposed concept or one or more examples described above or below (e.g. Fig. 2 to 4b). The portable waste collector and/or of the waste collector station may comprise one or more additional optional features corresponding to one or more aspects of the proposed concept or one or more examples described above or below.

In addition to the portable waste collector, embodiments further provide a corresponding waste collector station, which may be configured to receive the waste that is released by the waste release mechanism of the portable waste collector.

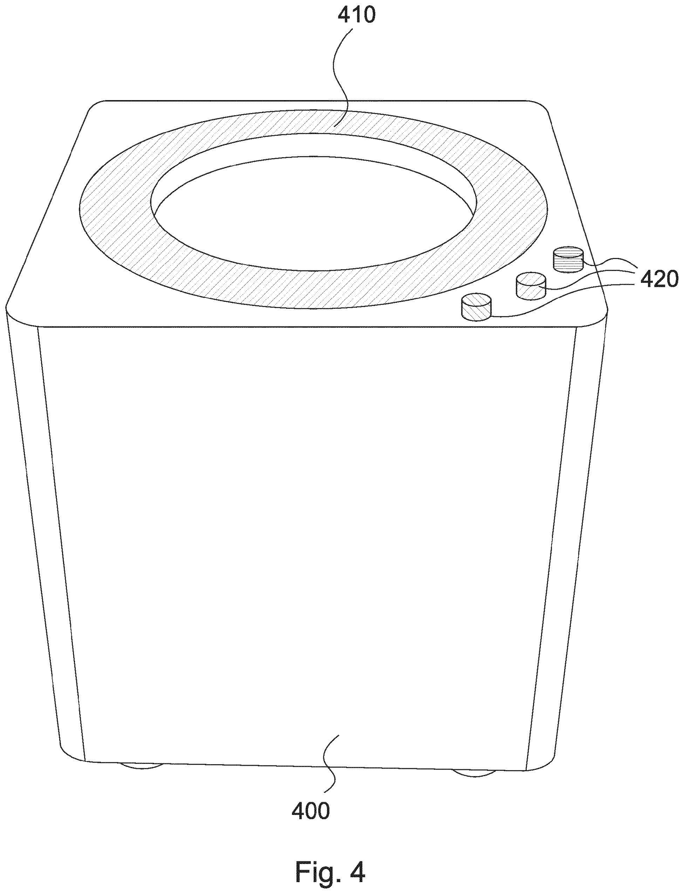

Fig. 2 shows a block diagram of an embodiment of a waste collector station 200. Fig. 2 further shows a block diagram of an embodiment of a waste collection system 1000 comprising the portable waste collector 100 (or portable waste collector 400 of Fig. 4) and the waste collector station 200. The portable waste collector and the waste collector station may e.g. separately store the same types of waste, e.g. in corresponding containers. The waste collector station has two or more containers 210 for storing two or more different types of waste, e.g. the same two or more different types of waste as the portable waste collector introduced in connection with Figs. 1a/1b. The waste collector station comprises an interface 220 for receiving waste from a portable waste collector, so that the two or more different types of waste are received separately from the portable waste collector and stored within the two or more containers. The waste collector station comprises a mechanical or electronic alignment component 250 for aligning a release opening of the portable waste collector with the interface 220.

The waste collector station may be used for collecting the waste that is stored within the portable waste collector, enabling a concept in which the waste is already sorted when it arrives at the waste collector station and in which the sorting occurs in the portable waste collector and is transferred to the waste collector station.

The waste collector station comprises the interface 220, which is adapted to receive the waste from the portable waste collector. The interface may for example comprise two or more inlets 230 adapted for receiving the two or more different types of waste from the portable waste collector, so that the two or more different types of waste are received separately from the portable waste collector via the two or more inlets and stored within the two or more containers. For example, a shape of the two or more inlets may be adapted to a shape of the release opening of the portable waste collector, e.g. to enable an unproblematic release of the waste from the portable waste collector. In at least some embodiments, the shape of the inlets may be used as a mechanical alignment component. For example, the waste collector station may comprise a mechanical alignment component that is form-fitted to a corresponding mechanical alignment component of the portable waste collector. The shape of the two or more inlets may form the mechanical alignment component. For example, as shown in Fig. 2, the two or more inlets may be funnel-shaped, e.g. to guide the alignment of the release opening of the portable waste collector relative to an inlet of the interface of the waste collector station. Alternatively, the waste collector station may comprise a receiver structure as mechanical alignment component, e.g. a pin, which is form-fitted to an alignment component of the portable waste collector. The alignment component may be used to trigger the release of the waste of the portable waste collector. In at least some embodiments, the alignment component may extend from the waste collector station. Alternatively, the alignment component may, as shown in Fig. 2, provide an ingress into a surface of the waste collector station. The portable waste collector may comprise a converse alignment component.

Alternatively, the alignment component may be an electronic alignment component. The portable waste collector may be an electronic alignment component configured to provide a radio-frequency signal for the portable waste collector, to guide the alignment of the release opening of the portable waste collector with the interface. For example, the alignment component may comprise a control module, which may be implemented similar to the control circuitry of the portable waste collector, and a radio-frequency transmitter. The control circuitry may be configured to control the radio-frequency transmitter, and to transmit the radio-frequency signal to the portable waste collector via the radio-frequency transmitter. For example, the control circuitry may be configured to determine an alignment between the release opening of the portable waste collector and an inlet of the waste collector station (e.g. using a visual or magnetic sensor), and to communicate to the portable waste collector whether the release opening and the inlet are aligned using the radio-frequency signal. Furthermore, the control circuitry may be configured to determine which inlet of the two or more inlets that is aligned with the release opening of the portable waste collector, and to communicate to the portable waste collector the type of waste associated with the inlet via the radio-frequency signal. Alternatively, the electronic alignment component may be a passive electronic alignment component, e.g. a RFID tag. The passive electronic alignment component may be triggered by a corresponding signal from the portable waste collector. The passive electronic alignment component may be configured to emit a low-power radio-frequency signal, to enable the portable waste collector to determine the alignment between the release opening and the interface based on the signal strength of the low-power radio-frequency signal. In at least some embodiments, each of the two or more inlets of the interface may be associated with an electronic alignment component. The radio-frequency signal may further comprise information related to a type of waste to be released into the inlet that is associated with the electronic alignment component providing the radio-frequency signal.

In some embodiments, the two or more inlets may each comprise a closing mechanism (i.e. a cover) that is configured to automatically give way if the release opening of the portable waste collector is in alignment with the respective inlet. In at least some embodiments, the two or more inlets may directly lead to the two or more containers.

Furthermore, the waste collector station according to an embodiment may comprise an identifier 240 for identifying the waste collection station towards the portable waste collector. For example, as introduced in connection with Fig 1b, the identifier may be a visual identifier or a radio-frequency transmitter configured to provide a radio-frequency signal for the portable waste collector. If the alignment component is an electronic alignment component, the alignment component may be the identifier. The identifier may also be used to guide an alignment between the portable waste collector and the waste collector station and to enable an automatic release of the waste of the portable waste collector. In at least some embodiments, each inlet of the two or more inlets 240 may comprise or be associated with an identifier 240. For example, each identifier may be configured to communicate a type of waste of the inlet the identifier is associated with to the portable waste collector.

More details and aspects of the portable waste collector, the waste collector station and/or the waste disposal system are mentioned in connection with the proposed concept or one or more examples described above or below (e.g. Figs. 1a to 1b, 3 to 4b). The portable waste collector, the waste collector station and/or the waste disposal system may comprise one or more additional optional features corresponding to one or more aspects of the proposed concept or one or more examples described above or below.

Embodiments further provide a (corresponding) waste disposal method. The waste disposal method may incorporate features that are introduced in connection with the portable waste collector, the waste collector station and/or the waste disposal system introduced above.

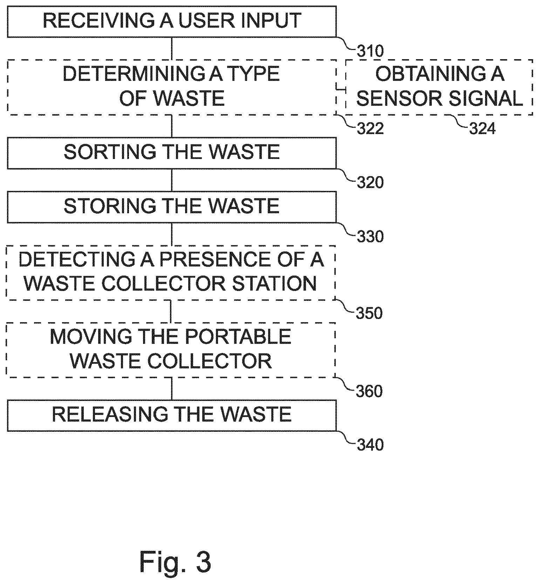

Fig. 3 shows a flow chart of the waste disposal method. The waste disposal method comprises Receiving 310 a user input via a user interface of a portable waste collector. The waste disposal method comprises sorting 320 waste that is received by a sorting mechanism of the portable waste collector into two or more containers of the portable waste collector using the sorting mechanism. The two or more containers are suitable for storing two or more different types of waste. The sorting is based on a waste sorting control signal that is obtained based on the received user input. The waste disposal method comprises storing 330 the two or more different types of waste within the two or more containers of the portable waste collector. The waste disposal method comprises releasing 340 the waste sorted into the two or more containers separately, e.g. within two or more corresponding containers of a waste collector station.

As previously discussed in relation to the portable waste collector and/or the waste collector station, the waste disposal method may comprise determining 322 a type of the received waste based on the received user input signal, and generating the sorting control signal based on the determined type of the received waste. The waste disposal method may further comprise obtaining 324 a sensor signal that enables the determination of the type of the received waste.

In at least some embodiments the two or more different types of waste sorted into the two or more containers are released separately into two or more corresponding containers of a waste collector station. The waste may be released in a corresponding container of the waste collector station once an alignment of a release opening and an inlet of the corresponding container is confirmed based on a user input or based on a sensor signal.

In order to facilitate the proper release of the waste, an alignment between a release opening of the portable waste collector and an inlet of the waste collector station may be reached. The waste disposal method comprises detecting 350 a presence of the waste collector station at a suitable position relative to the portable waste collector, and releasing the waste when a presence of the waste collector station at a suitable position relative to the portable waste collector is detected. For example, the presence of the waste collector station at a suitable position relative to the portable waste collector is detected based on a visual identifier captured by a camera of the portable waste collector. Alternatively or additionally, the presence of the waste collector station at a suitable position relative to the portable waste collector is detected based on a radio frequency signal received by the portable waste collector from the waste collector station.

The alignment may further be autonomously achieved by the portable waste collector. For example, the waste disposal method may comprise moving 360 the portable waste collector to a position that is aligned with an inlet of one of the two or more corresponding containers of the waste collector station using a propulsion system of the portable waste collector. More details and aspects of the portable waste disposal method are mentioned in connection with the proposed concept or one or more examples described above or below (e.g. Figs. 1a to 2, 4). The waste disposal method may comprise one or more additional optional features corresponding to one or more aspects of the proposed concept or one or more examples described above or below.

In the following, exemplary embodiments of the portable waste collector, the waste collector station and the waste disposal method are introduced.

At least some embodiments relate to a small version of a big waste island.

Embodiments may provide a small version (e.g. the portable waste collector) of the big waste island (e.g. the waste collector station) that people can keep on or near their desk. To keep the small version compact it may have one opening (e.g. the opening for receiving the waste of the portable waste collector) where users can place their trash (i.e. waste) for automatic sorting by the bin. To ensure correct sorting the small bin can either detect the kind of waste (e.g. determine the type of the received waste) and request confirmation from the user; or the user can indicate which kind of trash was placed in the opening for sorting (e.g. using the user interface). Waste may be sorted inside the small bin. Once it is full, the user of the small bin might take it to the big waste island. When they place it on top it may be emptied automatically. An optional feature may be sensors to detect proper sorting of waste.

In at least some embodiments, the user places a piece of trash on the cover of the input opening of the small waste bin (e.g. on a cover of the sorting mechanism of the portable waste collector). At this moment, the waste bin can detect which kind of trash is present (e.g. using the one or more sensors) or the user can select a kind of trash with matching buttons (e.g. using the user interface).

An important aspect of the embodiments is the user interface, which may comprise a light indicating the kind of trash and matching buttons to confirm or select the kind of trash. To indicate the kind of trash the small waste bin may have a ring around the input opening which lights up in the color of the detected/selected kind of trash (e.g. the indicator light). To confirm or select the kind of trash the waste bin may have several buttons (e.g. the selection elements) in matching colors. After the user presses the button in the color matching the kind of trash, the waste bin stores it into a separate compartment. Once the small bin (e.g. the portable waste collector) is full it can be placed on a full-size waste island (e.g. the waste collector station) for automatic emptying since the waste is already sorted. Since the waste is already sorted, the small waste bin may move to each opening of the big waste island and empty its matching compartment. Once empty, the user can take it back to their desk. At least some embodiments may help people to keep their desk clean, and may save them trips to a big waste island. It may improve waste sorting efficiency.

Fig. 4 shows a drawing of an embodiment of a portable waste collector. The portable waste collector may be implemented similar to the portable waste collector 100 introduced in connection with Figs. 1a and/or 1b. The portable waste collector 400 comprises a circular indicator light 410 that surrounds the opening for receiving the waste of the portable waste collector 400. The portable waste collector further comprises selection elements 420 (i.e. push buttons) for confirming or selecting a type of the received waste. The indicator light is configured to light up in a color according to the type of the received waste. The selection elements 420 are colored using the same colors as the indicator light.

The portable waste collector (or waste bin) shown in Fig. 4 may further be equipped with sensors (camera, olfactory, ...) to detect which kind of waste has been deposited. Once the kind of waste has been detected this is indicated with the indicator light 410 around the opening in the corresponding color. The user can then confirm this by pressing the corresponding button (selection element 420). Alternatively, the portable waste collector might not comprise sensors for determining the type of the waste. The user may place waste in the bin (e.g. on top of the lid), and select the kind of waste by pressing a button (of the buttons 420). The waste bin may confirm the kind of waste by lighting up the indicator light 410 in the corresponding color. The waste bin may then sorts the trash internally.

The aspects and features mentioned and described together with one or more of the previously detailed examples and figures, may as well be combined with one or more of the other examples in order to replace a like feature of the other example or in order to additionally introduce the feature to the other example, as long as it does not depart from the scope of the appended independent claims.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown.

## Claims

1. A portable waste collector (100; 400) comprising:
two or more containers (110) for storing two or more different types of waste;
a user interface (120) configured to receive a user input;
a sorting mechanism (130) configured to sort a received piece of waste into one of the two or more containers according to its type, the sorting being based on a waste sorting control signal obtained based on the user input received via the user interface (120);
a waste release mechanism (140) configured to separately release the waste stored in the two or more containers;
a control circuitry (150) configured to control the waste release mechanism such that it releases the waste stored within the two or more containers separately into two or more corresponding containers of a waste collector station (200); and
a presence detector (170) for detecting a presence of the waste collector station at a suitable position relative to the portable waste collector, wherein the control circuity (150) is configured to control the waste release mechanism to release the waste when a presence of the waste collector station at a suitable position relative to the portable waste collector is detected.

2. The portable waste collector according to claim 1, comprising control circuitry (150) configured to determine the type of the received waste based on the user input received via the user interface, wherein the control circuitry is configured to generate the waste sorting control signal based on the determined type of the received waste.

3. The portable waste collector according to claim 2, comprising one or more sensors (160) configured to provide a sensor signal to the control circuitry when a piece of waste is received by the sorting mechanism, the sensor signal enabling the control circuitry to determine the type of the received piece of waste.

4. The portable waste collector according to claim 3,
wherein the user interface is configured to provide an indication of the determined type of the piece of waste to a user of the portable waste collector based on a corresponding signal from the control circuitry, and wherein the user interface is configured to prompt the user for an input indicating whether the determined type of the piece of waste is correct or not.

5. The portable waste collector according to one of the claims 2 to 4, wherein the user interface comprises an indicator light (410), wherein the determined type of the received waste is indicated by a corresponding light color of the indicator light.

6. The portable waste collector according to one of the claims 1 to 5, wherein the user interface comprises two or more separate selection elements (420) to indicate two or more different types of waste, wherein the waste sorting control signal is generated based on a user selection of one of the two or more separate selection elements.

7. The portable waste collector according to one of the claims 1 to 6, wherein the presence detector is a camera configured to capture a visual identifier of the waste collector station, wherein the control circuitry is configured to detect the presence of the waste collector station at a suitable position relative to the portable waste collector based on the captured visual identifier.

8. The portable waste collector according to one of the claims 1 to 6, wherein the presence detector is a radio-frequency receiver configured to receive a radio frequency signal of the waste collector station, wherein the control circuitry is configured to detect the presence of the waste collector station at a suitable position relative to the portable waste collector based on the received radio frequency signal.

9. The portable waste collector according to one of the claims 1 to 8 comprising a control circuitry (150) and a propulsion system (180), wherein the control circuitry is configured to control the propulsion system such that the portable waste collector is moved to a position that is aligned with an inlet of one of two or more corresponding containers of a waste collector station, enabling the waste release mechanism to release the waste stored within the two or more containers separately into the two or more corresponding containers of the waste collector station.

10. The portable waste collector according to claim 9, wherein the waste release mechanism is configured to release the waste in a corresponding container of the waste collector station once an alignment of a release opening and an inlet of the corresponding container is confirmed based on a user input or based on a sensor signal.

11. The portable waste collector according to one of the claims 1 to 10, wherein the portable waste collector comprises at least one fill level sensor for determining a fill level of at least one of the two or more containers.

12. The portable waste collector according to one of the claims 1 to 11, wherein the two or more types of waste comprise at least two elements of the group of paper waste, plastic waste, aluminum waste, organic waste and residual waste.

13. A waste collector station (200) comprising:
two or more containers (210) for storing two or more different types of waste; and
an interface (220), adapted to receive waste from the portable waste collector according to one of the claims 1 to 10, so that the two or more different types of waste are received separately from the portable waste collector and stored within the two or more containers; and
a mechanical or electronic alignment component (250) for aligning a release opening of the portable waste collector with the interface (220),
wherein the waste collector station comprises an electronic alignment component configured to provide a radio-frequency signal for the portable waste collector, to guide the alignment of the release opening of the portable waste collector with the interface, and/or wherein the waste collector station comprises an identifier (240) for identifying the waste collection station towards the portable waste collector, wherein the identifier is a visual identifier, or wherein the identifier is a radio-frequency transmitter configured to provide a radio-frequency signal for the portable waste collector

14. A waste collection system comprising the portable waste collector according to one of 1 to 12 and the waste collector station according to claim 13.

15. A waste collecting method comprising:
Receiving (310) a user input via a user interface of a portable waste collector;
Sorting (320) waste that is received by a sorting mechanism of the portable waste collector into two or more containers of the portable waste collector using the sorting mechanism, wherein the two or more containers are suitable for storing two or more different types of waste, wherein the sorting is based on a waste sorting control signal that is obtained based on the received user input;
Storing (330) the two or more different types of waste within the two or more containers of the portable waste collector;
detecting a presence of a waste collector station at a suitable position relative to the portable waste collector; and
Releasing (340) the waste sorted into the two or more containers separately when a presence of the waste collector station at a suitable position relative to the portable waste collector is detected.

## Patentansprüche

1. Tragbarer Abfallsammler (100; 400), umfassend:
zwei oder mehr Behälter (110) zum Aufnehmen von zwei oder mehr verschiedenen Arten von Abfall;
eine Benutzerschnittstelle (120), die dafür ausgelegt ist, eine Benutzereingabe zu empfangen;
einen Sortiermechanismus (130), der dafür ausgelegt ist, ein aufgenommenes Stück Abfall je nach Art in einen der zwei oder mehr Behälter zu sortieren, wobei das Sortieren basierend auf einem Abfallsortier-Steuersignal erfolgt, das basierend auf der über die Benutzerschnittstelle (120) empfangenen Benutzereingabe erhalten wird;
einen Abfallabgabemechanismus (140), der dafür ausgelegt ist, den in den zwei oder mehr Behältern aufgenommenen Abfall getrennt abzugeben;
eine Steuerschaltung (150), die dafür ausgelegt ist, den Abfallabgabemechanismus so zu steuern, dass er den in den zwei oder mehr Behältern aufgenommenen Abfall getrennt in zwei oder mehr entsprechende Behälter einer Abfallsammelstation (200) abgibt; und
einen Präsenzdetektor (170) zum Erkennen des Vorhandenseins der Abfallsammelstation in einer geeigneten Position relativ zum tragbaren Abfallsammler, wobei die Steuerschaltung (150) dafür ausgelegt ist, den Abfallabgabemechanismus so zu steuern, dass er den Abfall abgibt, wenn das Vorhandensein der Abfallsammelstation in einer geeigneten Position relativ zum tragbaren Abfallsammler erkannt wird.

2. Tragbarer Abfallsammler gemäß Anspruch 1, eine Steuerschaltung (150) umfassend, die dafür ausgelegt ist, die Art des aufgenommenen Abfalls basierend auf den über die Benutzerschnittstelle empfangenen Benutzereingaben zu bestimmen, wobei die Steuerschaltung dafür ausgelegt ist, das Abfallsortier-Steuersignal basierend auf der bestimmten Art des aufgenommenen Abfalls zu erzeugen.

3. Tragbarer Abfallsammler gemäß Anspruch 2, einen oder mehrere Sensoren (160) umfassend, die dafür ausgelegt sind, ein Sensorsignal an die Steuerschaltung bereitzustellen, wenn ein Stück Abfall durch den Sortiermechanismus aufgenommen wird, wobei das Sensorsignal der Steuerschaltung ermöglicht, die Art des aufgenommenen Stücks Abfall zu bestimmen.

4. Tragbarer Abfallsammler gemäß Anspruch 3,
wobei die Benutzerschnittstelle dafür ausgelegt ist, einem Benutzer des tragbaren Abfallsammlers eine Anzeige der bestimmten Art des Stücks Abfall bereitzustellen, basierend auf einem entsprechenden Signal der Steuerschaltung, und wobei die Benutzerschnittstelle dafür ausgelegt ist, den Benutzer zu einer Eingabe aufzufordern, die angibt, ob die bestimmte Art des Stücks Abfall korrekt ist oder nicht.

5. Tragbarer Abfallsammler gemäß einem der Ansprüche 2 bis 4, wobei die Benutzerschnittstelle eine Anzeigeleuchte (410) umfasst, wobei die bestimmte Art des aufgenommenen Abfalls durch eine entsprechende Lichtfarbe der Anzeigeleuchte angezeigt wird.

6. Tragbarer Abfallsammler gemäß einem der Ansprüche 1 bis 5, wobei die Benutzerschnittstelle zwei oder mehr separate Auswahlelemente (420) umfasst, um zwei oder mehr verschiedene Arten von Abfall anzuzeigen, wobei das Abfallsortier-Steuersignal basierend auf einer Benutzerauswahl eines der zwei oder mehr separaten Auswahlelemente erzeugt wird.

7. Tragbarer Abfallsammler gemäß einem der Ansprüche 1 bis 6, wobei der Präsenzdetektor eine Kamera ist, die dafür ausgelegt ist, einen visuellen Kennzeichner der Abfallsammelstation zu erfassen, wobei die Steuerschaltung dafür ausgelegt ist, das Vorhandensein der Abfallsammelstation an einer geeigneten Position relativ zum tragbaren Abfallsammler zu erkennen, basierend auf dem erfassten visuellen Kennzeichner.

8. Tragbarer Abfallsammler gemäß einem der Ansprüche 1 bis 6, wobei der Präsenzdetektor ein Hochfrequenz-Empfänger ist, der dafür ausgelegt ist, ein Hochfrequenz-Signal der Abfallsammelstation zu empfangen, wobei die Steuerschaltung dafür ausgelegt ist, das Vorhandensein der Abfallsammelstation an einer geeigneten Position relativ zum tragbaren Abfallsammler zu erkennen, basierend auf dem empfangenen Hochfrequenz-Signal.

9. Tragbarer Abfallsammler gemäß einem der Ansprüche 1 bis 8, eine Steuerschaltung (150) und ein Antriebssystem (180) umfassend, wobei die Steuerschaltung dafür ausgelegt ist, das Antriebssystem so zu steuern, dass der tragbare Abfallsammler in eine Position bewegt wird, die an einem Einlass eines von zwei oder mehr entsprechenden Behältern einer Abfallsammelstation ausgerichtet ist, so dass der Abfallabgabemechanismus den in den zwei oder mehr Behältern aufgenommenen Abfall getrennt in die zwei oder mehr entsprechenden Behälter der Abfallsammelstation abgeben kann.

10. Tragbarer Abfallsammler gemäß Anspruch 9, wobei der Abfallabgabemechanismus dafür ausgelegt ist, den Abfall in einen entsprechenden Behälter der Abfallsammelstation abzugeben, sobald eine Ausrichtung einer Abgabeöffnung und eines Einlasses des entsprechenden Behälters basierend auf einer Benutzereingabe oder basierend auf einem Sensorsignal bestätigt ist.

11. Tragbarer Abfallsammler gemäß einem der Ansprüche 1 bis 10, wobei der tragbare Abfallsammler wenigstens einen Füllstandssensor zum Bestimmen des Füllstandes von wenigstens einem der zwei oder mehr Behälter umfasst.

12. Tragbarer Abfallsammler gemäß einem der Ansprüche 1 bis 11, wobei die zwei oder mehr Arten von Abfall wenigstens zwei Elemente aus der Gruppe Papierabfälle, Kunststoffabfälle, Aluminiumabfälle, organische Abfälle und Restabfälle umfassen.

13. Abfallsammelstation (200), umfassend:
zwei oder mehr Behälter (210) zum Aufnehmen von zwei oder mehr verschiedenen Arten von Abfall; und
eine Schnittstelle (220), die dafür ausgelegt ist, Abfälle aus dem tragbaren Abfallsammler gemäß einem der Ansprüche 1 bis 10 aufzunehmen, so dass die zwei oder mehr verschiedenen Arten von Abfällen getrennt aus dem tragbaren Abfallsammler aufgenommen und in den zwei oder mehr Behältern gelagert werden; und
eine mechanische oder elektronische Ausrichtungskomponente (250) zum Ausrichten einer Abgabeöffnung des tragbaren Abfallsammlers an der Schnittstelle (220),
wobei die Abfallsammelstation eine elektronische Ausrichtungskomponente umfasst, die dafür ausgelegt ist, ein Hochfrequenz-Signal für den tragbaren Abfallsammler bereitzustellen, um die Ausrichtung der Abgabeöffnung des tragbaren Abfallsammlers an der Schnittstelle zu steuern, und/oder wobei die Abfallsammelstation einen Kennzeichner (240) zum Identifizieren der Abfallsammelstation gegenüber dem tragbaren Abfallsammler umfasst, wobei der Kennzeichner ein visueller Kennzeichner ist, oder wobei der Kennzeichner ein Hochfrequenz-Sender ist, der dafür ausgelegt ist, ein Hochfrequenz-Signal für den tragbaren Abfallsammler bereitzustellen.

14. Abfallsammelsystem, umfassend den tragbaren Abfallsammler gemäß einem der Ansprüche 1 bis 12 und die Abfallsammelstation gemäß Anspruch 13.

15. Abfallsammelverfahren, umfassend:
Empfangen (310) einer Benutzereingabe über eine Benutzerschnittstelle eines tragbaren Abfallsammlers;
Sortieren (320) von Abfall, der durch einen Sortiermechanismus des tragbaren Abfallsammlers aufgenommen wird, in zwei oder mehr Behälter des tragbaren Abfallsammlers unter Verwendung des Sortiermechanismus, wobei die zwei oder mehr Behälter geeignet sind, zwei oder mehr verschiedenen Arten von Abfall aufzunehmen, wobei das Sortieren auf einem Abfallsortier-Steuersignal basiert, das basierend auf der empfangenen Benutzereingabe erhalten wird;
Aufnehmen (330) der zwei oder mehr verschiedenen Arten von Abfall in den zwei oder mehr Behältern des tragbaren Abfallsammlers;
Erkennen des Vorhandenseins einer Abfallsammelstation in einer geeigneten Position relativ zum tragbaren Abfallsammler; und
getrenntes Abgeben (340) des in die zwei oder mehr Behälter sortierten Abfalls, wenn die Anwesenheit der Abfallsammelstation in einer geeigneten Position relativ zum tragbaren Abfallsammler erkannt wird.

## Revendications

1. Collecteur de déchets portable (100 ; 400) comprenant :
deux conteneurs (110), ou davantage, pour stocker deux, ou davantage, types de déchets différents ;
une interface utilisateur (120) configurée pour recevoir une entrée utilisateur ;
un mécanisme de tri (130) configuré pour trier un déchet reçu dans l'un des deux conteneurs, ou davantage, en fonction de son type, le tri étant basé sur un signal de commande de tri des déchets obtenu sur la base de l'entrée utilisateur reçue par l'intermédiaire de l'interface utilisateur (120) ;
un mécanisme de libération des déchets (140) configuré pour libérer de manière séparée les déchets stockés dans les deux conteneurs, ou davantage ;
un circuit de commande (150) configuré pour commander le mécanisme de libération des déchets de manière à libérer les déchets stockés dans les deux conteneurs, ou davantage, de manière séparée dans deux conteneurs correspondants, ou davantage, d'une station de collecte des déchets (200) ; et
un détecteur de présence (170) pour détecter la présence de la station de collecte des déchets dans une position appropriée par rapport au collecteur de déchets portable, où le circuit de commande (150) est configuré pour commander le mécanisme de libération des déchets afin de libérer les déchets lorsque la présence de la station de collecte des déchets dans une position appropriée par rapport au collecteur de déchets portable est détectée.

2. Collecteur de déchets portable selon la revendication 1, comprenant un circuit de commande (150) configuré pour déterminer le type de déchets reçus sur la base de l'entrée de l'utilisateur reçue par l'intermédiaire de l'interface utilisateur, où le circuit de commande est configuré pour générer le signal de commande de tri des déchets sur la base du type déterminé des déchets reçus.

3. Collecteur de déchets portable selon la revendication 2, comprenant un ou plusieurs capteurs (160) configurés pour fournir un signal de capteur au circuit de commande lorsqu'un déchet est reçu par le mécanisme de tri, le signal de capteur permettant au circuit de commande de déterminer le type du déchet reçu.

4. Collecteur de déchets portable selon la revendication 3,
dans lequel l'interface utilisateur est configurée pour fournir une indication du type déterminé du déchet à un utilisateur du collecteur de déchets portable sur la base d'un signal correspondant provenant du circuit de commande, et où l'interface utilisateur est configurée pour demander à l'utilisateur une entrée indiquant si le type déterminé du déchet est correct ou non.

5. Collecteur de déchets portable selon l'une des revendications 2 à 4, dans lequel l'interface utilisateur comprend un voyant lumineux (410), où le type déterminé du déchet reçu est indiqué par une couleur de lumière correspondante du voyant lumineux.

6. Collecteur de déchets portable selon l'une des revendications 1 à 5, dans lequel l'interface utilisateur comprend deux, ou davantage, éléments de sélection distincts (420) pour indiquer deux, ou davantage, types de déchets différents, où le signal de commande de tri des déchets est généré sur la base d'une sélection par l'utilisateur de l'un des deux, ou davantage, éléments de sélection distincts.

7. Collecteur de déchets portable selon l'une des revendications 1 à 6, dans lequel le détecteur de présence est une caméra configurée pour capturer un identifiant visuel de la station de collecte de déchets, où le circuit de commande est configuré pour détecter la présence de la station de collecte de déchets à une position appropriée par rapport au collecteur de déchets portable sur la base de l'identifiant visuel capturé.

8. Collecteur de déchets portable selon l'une des revendications 1 à 6, dans lequel le détecteur de présence est un récepteur radiofréquence configuré pour recevoir un signal radiofréquence de la station de collecte de déchets, où le circuit de commande est configuré pour détecter la présence de la station de collecte de déchets à une position appropriée par rapport au collecteur de déchets portable sur la base du signal radiofréquence reçu.

9. Collecteur de déchets portable selon l'une des revendications 1 à 8 comprenant un circuit de commande (150) et un système de propulsion (180), où le circuit de commande est configuré pour commander le système de propulsion de sorte que le collecteur de déchets portable soit déplacé dans une position alignée avec une entrée de l'un des deux, ou davantage, conteneurs correspondants d'une station de collecte de déchets, permettant au mécanisme de libération des déchets de libérer les déchets stockés dans les deux conteneurs, ou davantage, de manière séparée dans les deux conteneurs, ou davantage, correspondants de la station de collecte de déchets.

10. Collecteur de déchets portable selon la revendication 9, dans lequel le mécanisme de libération des déchets est configuré pour libérer les déchets dans un conteneur correspondant de la station de collecte des déchets une fois que l'alignement d'une ouverture de libération et d'une entrée du conteneur correspondant est confirmé sur la base d'une entrée utilisateur ou sur la base d'un signal de capteur.

11. Collecteur de déchets portable selon l'une des revendications 1 à 10, dans lequel le collecteur de déchets portable comprend au moins un capteur de niveau de remplissage pour déterminer le niveau de remplissage d'au moins un des deux conteneurs, ou davantage.

12. Collecteur de déchets portable selon l'une des revendications 1 à 11, dans lequel les deux types de déchets, ou davantage, comprennent au moins deux éléments du groupe comprenant des déchets de papier, des déchets de plastique, des déchets d'aluminium, des déchets organiques et des déchets résiduels.

13. Station de collecte de déchets (200) comprenant :
deux, ou davantage, conteneurs (210) pour stocker deux, ou davantage, types de déchets différents ; et
une interface (220), adaptée pour recevoir les déchets du collecteur de déchets portable selon l'une des revendications 1 à 10, de sorte que les deux types de déchets différents, ou davantage, soient reçus de manière séparée du collecteur de déchets portable et stockés dans les deux conteneurs, ou davantage ; et
un composant d'alignement mécanique ou électronique (250) pour aligner une ouverture de libération du collecteur de déchets portable avec l'interface (220),
où la station de collecte de déchets comprend un composant d'alignement électronique configuré pour fournir un signal radiofréquence au collecteur de déchets portable, afin de guider l'alignement de l'ouverture de libération du collecteur de déchets portable avec l'interface, et/ou où la station de collecte de déchets comprend un identifiant (240) pour identifier la station de collecte de déchets vis-à-vis du collecteur de déchets portable, où l'identifiant est un identifiant visuel, ou où l'identifiant est un émetteur radiofréquence configuré pour fournir un signal radiofréquence au collecteur de déchets portable.

14. Système de collecte de déchets comprenant le collecteur de déchets portable selon l'une des revendications 1 à 12 et la station de collecte de déchets selon la revendication 13.

15. Procédé de collecte de déchets comprenant les étapes suivantes :
recevoir (310) une entrée utilisateur par l'intermédiaire d'une interface utilisateur d'un collecteur de déchets portable ;
trier (320) les déchets reçus par un mécanisme de tri du collecteur de déchets portable dans deux conteneurs, ou davantage, du collecteur de déchets portable à l'aide du mécanisme de tri, où les deux conteneurs, ou davantage, sont adaptés pour stocker deux types de déchets différents, ou davantage, le tri étant basé sur un signal de commande de tri des déchets obtenu sur la base de l'entrée utilisateur reçue ;
stocker (330) les deux types de déchets différents, ou davantage, dans les deux conteneurs, ou davantage, du collecteur de déchets portable ;
détecter la présence d'une station de collecte de déchets dans une position appropriée par rapport au collecteur de déchets portable ; et
libérer (340) les déchets triés dans les deux, ou davantage, conteneurs de manière séparée lorsque la présence d'une station de collecte de déchets à une position appropriée par rapport au collecteur de déchets portable est détectée.
